Europäisches Patentamt

European Patent Office

Office européen des brevets

(11) Veröffentlichungsnummer: **0 067 977**
**A1**

## (12) EUROPÄISCHE PATENTANMELDUNG

(21) Anmeldenummer: **82104668.7**

(22) Anmeldetag: **27.05.82**

(51) Int. Cl.³: **H 04 L 9/02**
**H 04 K 1/02**

(30) Priorität: **11.06.81 DE 3123167**

(43) Veröffentlichungstag der Anmeldung:
**29.12.82 Patentblatt 82/52**

(84) Benannte Vertragsstaaten:
**GB NL**

(71) Anmelder: **SIEMENS AKTIENGESELLSCHAFT Berlin und München**
**Postfach 22 02 61**
**D-8000 München 22(DE)**

(72) Erfinder: **Rauch, Walter, Dipl.-Ing.**
**Ammerseestrasse 155**
**D-8027 Neuried(DE)**

(72) Erfinder: **Grenzebach, Kurt**
**Zur Biberkampfbahn 13**
**D-6440 Bebra(DE)**

(72) Erfinder: **Thenert, Helmut**
**An der Brücke W1**
**D-6431 Heringen 1(DE)**

(54) **Verfahren und Schaltungsanordnung zum Verteilen von Schlüsseln an Schlüsselgeräte.**

(57) Zur verschlüsselten Übertragung von Nachrichten zwischen Endeinrichtungen (DE1, DE2) über ein Nachrichtennetz werden von einer Schlüsselverteilzentrale (SVZ) entsprechende Schlüssel (S) an die Schlüsselgeräte (SG) über das Nachrichtennetz selbst übertragen. Die Schlüsselverteilzentrale (SVZ) erzeugt ein Datenfeld (DF), das mit einer Schlüsselkennung (SK), den Schlüsselgeräte zugeordneten Schlüsselgerätekennungen (GK) und Schlüsselfeldern (SF) versehen ist. Die Schlüsselfelder (SF) enthalten die eigentlichen Schlüssel (S), Prüfzeichen (P) und weitere Zeichen, die den Gültigkeitszeitpunkt des Schlüssels (S1) festlegen. Nach dem Erkennen der Schlüsselkennung (SK) und der entsprechenden Schlüsselgerätekennung (GK) werden in den Schlüsselgeräten die entsprechenden Schlüssel (S) eingespeichert.

FIG 2

EP 0 067 977 A1

Croydon Printing Company Ltd.

0067977

SIEMENS AKTIENGESELLSCHAFT
Berlin und München

Unser Zeichen
VPA 81 P 6756 E

Verfahren und Schaltungsanordnung zum Verteilen von Schlüsseln an Schlüsselgeräte

Die Erfindung bezieht sich auf ein Verfahren zum Verteilen von Schlüsseln an Schlüsselgeräte, die an einem Nachrichtennetz angeschlossen sind, und die unter Verwendung von einer Schlüsselverteilzentrale verteilten Schlüsseln über das Nachrichtennetz zu übertragende Nachrichten verschlüsseln, sowie auf eine Schaltungsanordnung zur Durchführung des Verfahrens.

Es ist allgemein bekannt, daß zur Übertragung von verschlüsselten Nachrichten zwischen Endeinrichtungen in den Übertragungsweg zwischen den Endeinrichtungen Schlüsselgeräte eingeschaltet werden müssen. Die werden jeweils zwischen den Endeinrichtungen und Übertragungseinheiten angeordnet. Auf der Sendeseite werden die von der Endeinrichtung abgegebenen Nachrichten mittels des Schlüsselgeräts verschlüsselt und unter Verwendung der Übertragungseinheit an eine Fernleitung abgegeben. Auf der Empfangsseite werden die mittels der dortigen Übertragungseinheit empfangenen Nachrichten unter Verwendung des empfangsseitigen Schlüsselgerätes entschlüsselt und an die empfangende Endeinrichtung abgegeben. Zwischen den Übertragungseinheiten können beispielsweise Standverbindungen, ein Durchschaltewählnetz oder ein Nachrichtennetz mit speichernden Netzknoten (Paketvermittlungsnetz) eingeschaltet sein. Beim Durchschaltewählnetz ist eine Teilnehmer-Teilnehmer-Verschlüsselung und bei einem Nachrichtennetz mit speichernden Netzknoten ist sowohl eine abschnittsweise Verschlüsselung als auch eine Teilnehmer-Teilnehmer-Verschlüsselung üblich.

Ret 1 Obh / 5.6.1981

6 Ausfertigungen
1 Ausfertigung

Üblicherweise wird jedem Schlüsselgerät von einer Schlüsselverteilzentrale individuell ein Stationsschlüssel zugeordnet. Für eine aktuelle Übertragung von Nachrichten oder für einen bestimmten Zeitabschnitt erzeugt die Schlüsselverteilzentrale einen weiteren Schlüssel und sendet diesen Schlüssel, verschlüsselt mit dem jeweiligen Stationsschlüssel an das betreffende Schlüsselgerät. Dieser aktuelle Schlüssel gilt dann für die Übertragung der Nachrichten zwischen den Datenendeinrichtungen solange, bis die Schlüsselverteilzentrale einen neuen Schlüssel zuteilt.

Eine übliche, vielfach praktizierte Maßnahme ist die Verteilung der Schlüssel an die entsprechenden Schlüsselgeräte unter Verwendung von Datenträgern, wie beispielsweise Lochkarten, Lochstreifen oder magnetischen Datenträgern, die auf dem Postwege oder durch Kuriere verteilt werden. In Nachrichtensystemen, in denen sehr viele Datenendeinrichtungen miteinander korrespondieren, ist eine derartige Schlüsselverteilung jedoch nicht mehr praktikabel.

Es wäre denkbar, neben dem Nachrichtennetz, an dem die Schlüsselgeräte über die Übertragungseinrichtungen angeschlossen sind, ein Schlüsselverteilnetz vorzusehen, über das den einzelnen Schlüsselgeräten die aktuellen Schlüssel auf elektronischem Wege zugeteilt werden. Eine derartige Schlüsselverteilung erfordert jedoch einen verhältnismäßig großen Aufwand.

Der Erfindung liegt daher die Aufgabe zugrunde, ein Verfahren und eine Schaltungsanordnung anzugeben, mit deren Hilfe auf einfache Weise und mit geringem Aufwand eine Verteilung von Schlüsseln an eine Mehrzahl von Schlüsselgeräten ermöglicht wird.

Erfindungsgemäß wird die Aufgabe bei dem Verfahren der eingangs genannten Art gelöst durch die zeitliche Aufeinanderfolge folgender Verfahrensschritte:

a) die Schlüsselverteilzentrale bildet einen Datenblock, der in einem Datenfeld eine Schlüsselkennung, mindestens eine, einem Schlüsselgerät zugeordnete Schlüsselgerätekennung und mindestens einen zugehörigen Schlüssel enthält,

b) der Datenblock wird in entsprechender Weise wie die zu übertragenden Nachrichten über das Nachrichtennetz zu den jeweiligen Schlüsselgeräten übertragen,

c) in den Schlüsselgeräten werden die Schlüsselkennung und die Schlüsselgerätekennungen geprüft,

d) beim Erkennen der Schlüsselkennung und der, dem jeweiligen Schlüsselgerät zugeordneten Schlüsselgerätekennung wird der zugehörige Schlüssel im Schlüsselgerät gespeichert.

Das Verfahren gemäß der Erfindung hat den Vorteil, daß neben dem bestehenden Nachrichtennetz kein weiteres Netz erforderlich ist, und es damit einen äußerst geringen Aufwand erfordert. Für die Übertragung der Schlüssel können die normalen, auch für die Übertragung der Nachrichten vorgesehenen Prozeduren verwendet werden. Die Schlüsselgeräte müssen die für die Übertragung der Nachrichten vorgesehenen Prozeduren nicht kennen, und können daher sehr vielseitig eingesetzt werden. Außerdem erfordern die Schlüsselgeräte keine zusätzlichen, neu zu definierenden Schnittstellen.

Das Verfahren gemäß der Erfindung kann insbesondere dann in vorteilhafter Weise eingesetzt werden, wenn die Übertragung der Nachrichten über ein Nachrichtennetz mit speichernden Netzknoten erfolgt. Falls die Nachrichten abschnittsweise verschlüsselt übertragen werden, und in den einzelnen Streckenabschnitten des Nachrichtennetzes jeweils zwei Schlüsselgeräte angeordnet sind, ist es vorteilhaft, wenn das Datenfeld neben der Schlüsselkennung zwei Schlüsselgerätekennungen und zwei Schlüsselfelder enthält, die jeweils einem der beiden Schlüsselgeräte zugeordnet sind.

Falls die Übertragung der Nachrichten entsprechend einer Teilnehmer-Teilnehmer-Verschlüsselung erfolgt, und damit in einem, einer Datenendeinrichtung zugeordneten Streckenabschnitt nur ein einziges Schlüsselgerät vorgesehen ist, ist es vorteilhaft, wenn das Datenfeld neben der Schlüsselkennung nur eine einem Schlüsselgerät zugeordnete Schlüsselgerätekennung und einen zugehörigen Schlüssel enthält.

Um den jeweils aktuellen Schlüssel noch innerhalb des Netzknotens verschlüsselt übertragen zu können, ist es zweckmäßig, wenn der zu einem Schlüsselgerät übertragene Schlüssel jeweils mit einem dem Schlüsselgerät zugeordneten Stationsschlüssel verschlüsselt übertragen wird.

Zur Sicherung des aktuellen Schlüssels und/oder des gesamten Datenfeldes ist es vorteilhaft, wenn das Schlüsselfeld Prüfzeichen enthält.

Falls der neue Schlüssel nicht sofort in Kraft treten soll, ist es günstig, wenn das Schlüsselfeld Zeichen enthält, die den Gültigkeitszeitpunkt und/oder die Gültigkeitsdauer des zugehörigen Schlüssels im entsprechenden Schlüsselgerät festlegen.

Zur Sicherung des Datenfeldes auf den Streckenabschnitten ist es günstig , wenn das Datenfeld auf den Übertragungsstrecken verschlüsselt übertragen wird.

Eine besonders vorteilhafte Anwendung des Verfahrens wird erreicht, wenn das Nachrichtennetz als Paketvermittlungsnetz ausgebildet ist.

In diesem Fall ist das Datenfeld eines Blockes, der neben dem Datenfeld ein Adressfeld, ein Steuerfeld und ein Blockprüfungsfeld enthält.

Bei einer vorteilhaften Schaltungsanordnung zur Durchführung des Verfahrens wird das Datenfeld in der Schlüsselverteilzentrale zusammengestellt und in ähnlicher Weise wie von einer Datenendeinrichtung an das Nachrichtennetz abgegeben. Zum Erkennen des jeweiligen Schlüssels im Schlüsselgerät ist es vorteilhaft, wenn die Schlüsselgeräte jeweils eine erste Auswertestufe, die beim Erkennen der Schlüsselkennung ein Steuersignal erzeugt und eine zweite Auswertestufe enthalten, die beim Vorliegen der Steuersignale und beim Erkennen der Schlüsselgerätekennung ein Freigabesignal erzeugt, mit dem ein Einspeichern des jeweiligen Schlüssels in einen Speicher freigegeben wird.

Für die Aktivierung des Schlüssels ist es günstig, wenn das Schlüsselgerät eine Zeitstufe enthält, die unter Verwendung der im Datenfeld enthaltenen Zeichen den Gültigkeitszeitpunkt und/oder die Gültigkeitsdauer des jeweiligen Schlüssels steuert.

Im folgenden wird eine Durchführung des Verfahrens gemäß der Erfindung anhand von Zeichnungen näher erläutert. Es zeigen

Fig. 1 ein Blockschaltbild einer Übertragungsanordnung mit einem Nachrichtennetz mit speichernden Netzknoten,

Fig. 2 den Aufbau eines Datenfeldes in einem Datenblock,

Fig. 3 ein Blockschaltbild von Teilen von Schlüsselgeräten.

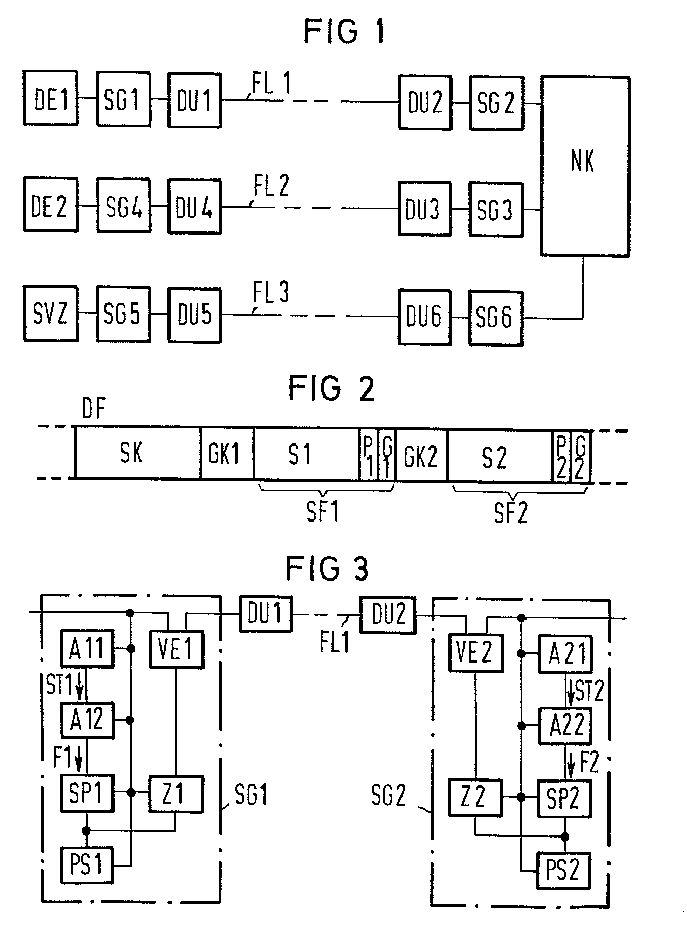

Bei dem in Fig. 1 dargestellten Nachrichtennetz mit speichernden Netzknoten NK (Paketvermittlungsnetz) wird angenommen, daß die Nachrichten, beispielsweise Daten abschnittsweise verschlüsselt von einer Datenendeinrichtung
DE1 zu einer Datenendeinrichtung DE2 übertragen werden.
Die von der Datenendeinrichtung DE1 abgegebenen Daten werden in einem Schlüsselgerät SG1 verschlüsselt und über
eine Datenübertragungseinheit DU1 an eine Fernleitung FL1
abgegeben. Eine Datenübertragungseinheit DU2 empfängt die
verschlüsselten Daten und gibt sie an ein Schlüsselgerät
SG2 ab. Dieses entschlüsselt die Daten und überträgt sie
über den Netzknoten NK zu einem Schlüsselgerät SG3. Dieses
verschlüsselt die Daten erneut und gibt sie über eine Datenübertragungseinheit DU3 an eine Fernleitung FL2 ab.
An der Fernleitung FL2 ist eine weitere Datenübertragungseinheit DU4 angeschlossen, die die verschlüsselten Daten
an ein Schlüsselgerät SG4 abgibt. Dort werden sie wieder
entschlüsselt und der Datenendeinrichtung DE2 zugeführt.

Die Ver- und Entschlüsselung der Daten in den Schlüsselgeräten SG1 bis SG4 erfolgt unter Verwendung eines, jedem
Schlüsselgerät individuell zugeordneten Stationsschlüssels
und eines für den jeweils aktuellen Vorgang geltenden
weiteren Schlüssels. Der Stationsschlüssel wird beispielsweise von Hand in das entsprechende Schlüsselgerät eingegeben. Eine Schlüsselzentrale SVZ kennt die jeweiligen Stationsschlüssel. Die jeweils für eine Übertragung von Daten
geltenden aktuellen Schlüssel sind ebenfalls in der Schlüsselverteilzentrale SVZ bekannt und sie werden über das
Nachrichtennetz an die an der Übertragung beteiligten
Schlüsselgeräte verschlüsselt übertragen. Die Übertragung
zu den Schlüsselgeräten erfolgt dabei in denselben Prozeduren, wie auch die übliche Übertragung von Nachrichten.
Die Schlüsselverteilzentrale SVZ ist zum Zweck der Übertragung der Schlüssel in ähnlicher Weise wie die Datenendeinrichtungen DE1 und DE2 über ein Schlüsselgerät SG5, eine

Datenübertragungseinheit DU5, gegebenenfalls eine Fernleitung FL3, eine weitere Datenübertragungseinheit DU6 und ein weiteres Schlüsselgerät SG6 an dem Netzknoten NK angeschlossen.

Bei der Zuteilung eines Schlüssels für eine abschnittsweise Verschlüsselung der Daten, erzeugt die Schlüsselverteilzentrale SVZ einen Datenblock, der in ähnlicher Weise aufgebaut ist, wie ein normaler Nachrichtenblock. Der Datenblock wird jedoch mit einer besonderen Adresse gekennzeichnet, so daß die zugeordnete Datenendeinrichtung den mit den Schlüsseln versehenen Block sofort erkennen kann.

Der in Fig. 2 dargestellte Ausschnitt aus einem Datenblock enthält ein Datenfeld DF, das mit Schlüsseln für die Schlüsselgeräte SG1 und SG2 versehen ist. Ein entsprechender Datenblock wird für die Übertragung der Schlüssel zu den Schlüsselgeräten SG3 und SG4 verwendet.

Die Schlüsselverteilzentrale SVZ bildet das Datenfeld DF aus einer Schlüsselkennung SK mit beispielsweise 128 Bits, aus zwei Schlüsselgerätekennungen GK1 und GK2 mit jeweils 24 Bits und aus zwei Schlüsselfeldern SF1 und SF2 mit jeweils 152 Bits. Die Schlüsselkennung SK ist derart aufgebaut, daß sie bei der normalen Übertragung von Nachrichten möglichst sehr selten vorkommt. Die Schlüsselgerätekennung GK1 ist dem Schlüsselgerät SG1 zugeordnet, und im Schlüsselfeld SF1 ist der für das Schlüsselgerät SG1 vorgesehene Schlüssel S1 enthalten. Zusätzlich kann das Schlüsselfeld SF1 Prüfzeichen P1 für den Schlüssel S1 und weitere Zeichen G1 enthalten, die den Gültigkeitszeitpunkt und/oder die Gültigkeitsdauer des Schlüssels S1 festlegen. In entsprechender Weise ist die Schlüsselgerätekennung GK2 dem Schlüsselgerät S2 zugeordnet, und das Schlüsselfeld SF2 enthält den zugehörigen Schlüssel S2, sowie dessen Prüfzeichen P2 und Zeichen G2 für die Gültigkeit des Schlüssels S2. Die Schlüssel S1 und S2 umfassen beispielsweise jeweils 120 Bits, während die Prüfzeichen P1 und P2 16 Bits und die Zeichen G1 und G2 16 Bits umfassen. Die Schlüssel S1 und S2 sind vorteilhafterweise mit den Stationsschlüsseln der Schlüsselgeräte SG1 bzw. SG2 verschlüsselt.

Zu Beginn der Verteilung der Schlüssel S1 und S2 an die Schlüsselgeräte SG1 und SG2 stellt die Schlüsselverteilzentrale eine Verbindung zur Datenendeinrichtung DE1 her, und überträgt den Datenblock über die Fernleitung FL3 und FL1. Das Datenfeld DF wird dabei im Schlüsselgerät SG5 verschlüsselt und im Schlüsselgerät SG6 wieder entschlüsselt. Im Netzknoten NK liegt das Datenfeld unverschlüsselt vor, wobei jedoch die Schlüssel S1 und S2, wie bereits erwähnt, mit den Stationsschlüsseln der Schlüsselgeräte SG1 bzw. SG2 verschlüsselt sind. Bei der verschlüsselten Übertragung des Datenfelds DF auf dem Streckenabschnitt zwischen dem Netzknoten NK und der Datenendeinrichtung DE1 erkennen die Schlüsselgeräte SG1 und SG2 beim Empfang der Schlüsselkennung SK, daß im folgenden Schlüssel übertragen werden. Die Schlüsselgeräte SG1 und SG2 prüfen anschließend die Schlüsselgerätekennungen GK1 und GK2. Wenn das Schlüsselgerät SG1 die Schlüsselgerätekennung GK1 erkennt, wird das im Datenfeld DF enthaltene Schlüsselfeld SF1 in einen Speicher übernommen. In entsprechender Weise übernimmt das Schlüsselgerät SG2, wenn es die Schlüsselgerätekennung SK2 als ihm zugeordnet erkennt, das Schlüsselfeld SF2 in einen Speicher.

Weitere Einzelheiten werden im folgenden zusammen mit dem in Fig. 3 dargestellten Blockschaltbild beschrieben.

Bei dem in Fig. 3 dargestellten Blockschaltbild sind die für die Durchführung des Verfahrens erforderlichen Teile der Schlüsselgeräte SG1 und SG2 dargestellt. Es wird davon ausgegangen, daß über die Fernleitung FL1 eine Halbduplexübertragung zwischen der Datenendeinrichtung DE1 und dem Netzknoten NK erfolgt. Für eine Vollduplexübertragung müssen die entsprechenden Entschlüsselungs- und Verschlüsselungsstufen in den Schlüsselgeräten SG1 und SG2 in bekannter Weise nochmals vorhanden sein.

Wenn vom Netzknoten NK das Datenfeld DF unverschlüsselt abgegeben wird, erkennt eine Auswertestufe A21 im Schlüsselgerät SG2 die Schlüsselkennung SK. Die Auswertestufe A21 gibt ein Steuersignal ST2 an eine weitere Auswertestufe A22, die im Datenfeld DF die Schlüsselgerätekennung GK2 überprüft. Falls diese Schlüsselgerätekennung GK2 dem Schlüsselgerät SG2 zugeordnet ist, gibt sie ein Freigabesignal F2 an einen Speicher SP2 ab, in dem zumindest der Schlüssel S2 und gegebenenfalls auch die Prüfzeichen P2 und die Zeichen G2 gespeichert werden. Die Prüfzeichen P2 werden in einer Prüfstufe PS2 ausgewertet. Falls die Prüfzeichen P2 auf einen fehlerhaften Schlüssel S2 hindeuten, wird dieser als ungültig erklärt. Die Prüfstufe PS2 sorgt in diesem Fall für eine Trennung der Verbindung und gegebenenfalls für eine Mitteilung an die Schlüsselverteilzentrale SVZ. Die Zeichen G2 können einer Zeitstufe Z2 zugeführt werden, die den Gültigkeitszeitpunkt für den neuen Schlüssel festlegt. Beim Eintritt des Gültigkeitszeitpunktes wird der Schlüssel S2 vor oder nach einer Entschlüsselung mit dem, dem Schlüsselgerät SG2 zugeordneten Stationsschlüssel der Schlüsselstufe VE2 zugeführt. Es erfolgt in der Schlüsselstufe VE2 die Entschlüsselung des Schlüssels S2.

Auf der Fernleitung FL1 wird das Datenfeld DF verschlüsselt übertragen. Das Schlüsselgerät SG1 enthält eine Schlüsselstufe VE1, die das Datenfeld DF entschlüsselt und der Datenendeinrichtung DE1 zuführt. In ähnlicher Weise wie im Schlüsselgerät SG2 ist im Schlüsselgerät SG1 eine erste Auswertestufe A11 vorgesehen, die das Auftreten der Schlüsselkennung SK erkennt und ein Steuersignal ST1 an eine weitere Auswertestufe A12 abgibt, die das Auftreten der Schlüsselgerätekennung GK1 prüft. Wenn die Schlüsselgerätekennung GK1 dem Schlüsselgerät SG1 zugeordnet ist, gibt die Auswertestufe A12 ein Freigabesignal F1 an einen Speicher SP1 ab, um das Schlüsselfeld SF1 einzuspeichern. Wenn eine Prüfstufe PS1 die Richtigkeit des Schlüssels S1 feststellt, wird dieser als gültig erklärt und die Zeichen G1 können in einer Zeitstufe Z1 eingespeichert werden, um den Gültigkeitszeitpunkt zu ermitteln. Wenn dieser eintritt, wird der Schlüssel S1, ebenfalls ver- oder entschlüsselt, der Schlüsselstufe VE1 zugeführt. Die Prüfstufe PS1 kann im Fall der Ungültigkeit des Schlüssels S1 dies der Datenendeinrichtung DE1 mitteilen oder selbst für eine Mitteilung an die Schlüsselverteilzentrale SVZ sorgen und dann die Verbindung zum Netzknoten NK trennen. Datenübertragungsfehler werden im Rahmen der üblichen Datenübertragungsprozedur von der Datenendeinrichtung DE erkannt, bewertet und gegebenenfalls wird eine Wiederholung der Übertragung veranlaßt.

Die Schlüssel S1 und S2 können in den Schlüsselstufen VE1 und VE2 einem Verschlüssler und einem Entschlüssler zugeführt werden. Es ist auch möglich, für beide Übertragungseinrichtungen unterschiedliche Schlüssel zu verwenden. In diesem Fall müssen entweder zwei Datenblöcke übertragen werden, oder der Datenblock muß derart erweitert werden, daß in den Schlüsselfeldern SF1 bzw. SF2 auch die weiteren Schlüssel enthalten sind.

In ähnlicher Weise wie die Schlüssel den Schlüsselgeräten SG1 und SG2 zugeteilt werden, werden sie anschließend den Schlüsselgeräten SG3 und SG4 zugeteilt. In jedem Fall prüfen die Datenendeinrichtungen DE1 und DE2 durch übliche Prüfverfahren die Richtigkeit der empfangenen Datenblöcke. Nach der Verteilung der Schlüssel und nach dem
Eintritt des Gültigkeitszeitpunktes kann mit der Übertragun der Daten zwischen den Datenendeinrichtungen DE1 und DE2
begonnen werden.

Bei einer Teilnehmer-Teilnehmer-Verschlüsselung sind die
Datenübertragungseinheiten DU2, DU3 und DU6 und die Schlüsselgeräte SG2, SG3 und SG6 nicht erforderlich. In diesem
Fall überträgt die Schlüsselverteilzentrale SVZ an das
Schlüsselgerät SG1 ein Datenfeld, das nur die Schlüsselkennung SK, die Schlüsselgerätekennung GK1 und das Schlüsselfeld SF1 enthält. In entsprechender Weise wird an das
Schlüsselgerät SG4 ein Datenfeld DF übertragen, das nur
die Schlüsselkennung SK, die Schlüsselgerätekennung GK2
und das Schlüsselfeld SF2 enthält. Um das gleiche Format
des Datenfeldes DF beizubehalten, kann es dabei zweckmässig sein, die nicht benötigte Schlüsselgerätekennung GK
und/oder das entsprechende Schlüsselfeld SF mit einer vereinbarten Adresse zu belegen.

10 Patentansprüche

3 Figuren

Patentansprüche

1. Verfahren zum Verteilen von Schlüsseln an Schlüsselgeräte, die an einem Nachrichtennetz angeschlossen sind,
und die unter Verwendung von von einer Schlüsselverteilzentrale verteilten Schlüsseln über das Nachrichtennetz
zu übertragende Nachrichten verschlüsseln,
g e k e n n z e i c h n e t   d u r c h   folgende Verfahrensschritte
a) die Schlüsselverteilzentrale (SVZ) bildet einen Datenblock, der in einem Datenfeld (DF) eine Schlüsselkennung
(SK), mindestens eine, einem Schlüsselgerät (SG) zugeordnete Schlüsselgerätekennung (GK) und mindestens einen zugehörigen Schlüssel (S) enthält
b) der Datenblock wird in entsprechender Weise wie die zu
übertragenden Nachrichten über das Nachrichtennetz zu den
jeweiligen Schlüsselgeräten (SG) übertragen
c) in den Schlüsselgeräten (SG) werden die Schlüsselkennung (SK) und die Schlüsselgerätekennungen (GK) geprüft
d) beim Erkennen der Schlüsselkennung (SK) und der, dem
jeweiligen Schlüsselgerät (SG) zugeordneten Schlüsselgerätekennung (GK) wird der zugehörige Schlüssel (S) im
Schlüsselgerät (SG) gespeichert.

2. Verfahren nach Anspruch 1, bei dem in einem Streckenabschnitt des Nachrichtennetzes zwei Schlüsselgeräte angeordnet sind,
d a d u r c h   g e k e n n z e i c h n e t , daß das
Datenfeld (DF) neben der Schlüsselkennung (SK) zwei Schlüsselgerätekennungen (GK1,GK2) und zwei Schlüsselfelder (SF1,
SF2) enthält, die jeweils einem der beiden Schlüsselgeräte (SG1,SG2) zugeordnet sind.

3. Verfahren nach Anspruch 1, bei dem zwischen zwei Endeinrichtungen (DE1,DE2) eine Teilnehmer-Teilnehmer-Verschlüsselung erfolgt,

dadurch gekennzeichnet, daß das Datenfeld (DF) neben der Schlüsselkennung (SK) nur eine einem Schlüsselgerät (SG) zugeordnete Schlüsselgerätekennung (GK) und einen zugehörigen Schlüssel (S) enthält.

4. Verfahren nach einem der Ansprüche 1 bis 3, dadurch gekennzeichnet, daß der zu einem Schlüsselgerät (SG) übertragene Schlüssel (S) jeweils mit einem dem Schlüsselgerät (SG) zugeordneten Stationsschlüssel verschlüsselt übertragen wird.

5. Verfahren nach einem der Ansprüche 1 bis 4, dadurch gekennzeichnet, daß das Schlüsselfeld (SF) Prüfzeichen (P) enthält.

6. Verfahren nach einem der Ansprüche 1 bis 5, dadurch gekennzeichnet, daß das Schlüsselfeld (SF) Zeichen (G) enthält, die den Gültigkeitszeitpunkt und/oder die Gültigkeitsdauer des zugehörigen Schlüssels (S) im entsprechenden Schlüsselgerät (SG) festlegen.

7. Verfahren nach einem der Ansprüche 1 bis 6, dadurch gekennzeichnet, daß das Datenfeld (DF) auf den Übertragungsstrecken (FL) verschlüsselt übertragen wird.

8. Verfahren nach einem der Ansprüche 1 bis 7, dadurch gekennzeichnet, daß das Nachrichtennetz als Paketvermittlungsnetz ausgebildet ist.

9. Schaltungsanordnung zur Durchführung des Verfahrens nach Anspruch 1, dadurch gekennzeichnet, daß die Schlüsselgeräte (SG) jeweils eine erste Auswertestufe (A11,A21), die beim Erkennen der Schlüsselkennung ein Steuersignal (ST1,ST2) erzeugt und eine zweite Auswertestufe (A12,A22) enthalten, die beim Vorliegen der Steuersignale (ST1,ST2) und beim Erkennen der Schlüsselgerätekennung (GK1,GK2) ein Freigabesignal (F1,F2) erzeugt, mit
dem ein Einspeichern des jeweiligen Schlüssels (S1,S2)
in einen Speicher (SP1,SP2) freigegeben wird.

10. Schaltungsanordnung nach Anspruch 9,
d a d u r c h   g e k e n n z e i c h n e t , daß das
Schlüsselgerät (SG) eine Zeitstufe (Z1,Z2) enthält, die
unter Verwendung der im Datenfeld (DF) enthaltenen Zeichen (G) den Gültigkeitszeitpunkt und/oder die Gültigkeitsdauer des jeweiligen Schlüssels (S) steuert.

0067977

1/1

FIG 1

FIG 2

FIG 3

**0067977**

Nummer der Anmeldung

### EUROPÄISCHER RECHERCHENBERICHT

EP 82104668.7

| EINSCHLÄGIGE DOKUMENTE | | | KLASSIFIKATION DER ANMELDUNG (Int Cl.3) |
|---|---|---|---|
| Kategorie | Kennzeichnung des Dokuments mit Angabe, soweit erforderlich, der maßgeblichen Teile | betrifft Anspruch | |
| X | <u>EP - A1 - 0 023 074</u> (MOTOROLA)<br><br>* Seite 5, Zeile 4 - Seite 6, Zeile 1; Seite 25, Zeile 16 - Seite 32, Zeile 5 *<br><br>---- | 1 | H 04 L   9/02<br>H 04 K   1/02 |

**RECHERCHIERTE SACHGEBIETE (Int. Cl.3)**

H 04 L   9/00

H 04 K   1/00

H 04 L 11/00

G 09 C   1/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| WIEN | 20-09-1982 | HAJOS |

EPA form 1503.1   06.78